# EUROPEAN PATENT APPLICATION

(11) **EP 4 052 778 A1**
(43) Date of publication of application: **07.09.2022**
(21) Application number: 21172485.1
(22) Date of filing: 06.05.2021
(51) Int. Cl.: B01D 53/14

(54) **METHOD AND SYSTEM FOR TREATING A STEAM CONDENSATE GENERATED BY A HIGH-PRESSURE GENERATOR OF A CARBON DIOXIDE ABSORPTION SOLUTION**

(30) Priority: 02.03.2021 IN 202111008669
(71) Applicant: Yara International ASA, 0277 Oslo (NO)
(72) Inventor: Singh, Udaypal, Babrala, District-Sambhal (Uttar Pradesh) (IN)
(74) Representative: De Clercq & Partners

(57) **Abstract**

The present disclosure relates to a method for treating a steam condensate generated by a high-pressure regenerator (**57**) for regenerating a carbon dioxide absorption solution. The method comprises the steps of:
a) capturing carbon dioxide in the carbon dioxide absorption (**56**) unit using a carbon dioxide absorption solution;
b) feeding the carbon dioxide absorption solution comprising absorbed carbon dioxide and generated in step a) to a high-pressure regenerator (**57**); and
c) supplying low-pressure steam to a steam-fired reboiler (**58**) for supplying heat to the high-pressure regenerator (**57**), thereby producing a steam condensate and a regenerated carbon dioxide absorption solution;
and is characterised in that it further comprises the step of:
d) supplying the steam condensate produced in step c) to the de-aerator (**59**), thereby producing an aqueous solution suitable for producing steam with an oxygen content ranging from 7 ppb to less than 20 ppb.

The present disclosure further relates to a system for performing the method of the disclosure and to the use of this system in performing the method of the disclosure. The present disclosure further relates to a method for revamping a system further comprising a process condensate stripper and a water demineralisation unit into the system of the disclosure.

## Description

### Field of the disclosure

The present disclosure relates to a method and a system for carbon dioxide absorption, in particular to a method and system for treating a steam condensate generated by a high pressure generator for the regeneration of a carbon dioxide absorption solution.

### Background

Carbon dioxide has many uses. For example, carbon dioxide is used to produce urea, to carbonate beverages, to chill, freeze and package seafood, meat, poultry, baked goods, fruits, and vegetables, and to extend the shelf-life of dairy products. It is an important environmental component in industrial waste and process water treatment as a replacement for sulfuric acid to control pH levels. Other uses include drinking water treatment, an environmentally friendly pesticide, and an atmosphere additive in greenhouses to improve the growth of vegetables.

In general, carbon dioxide is produced by purifying a waste stream which is a by-product of an organic or inorganic chemical process. The waste stream, which comprises a high concentration of carbon dioxide, is condensed and purified in multiple stages and then distilled to produce the product grade carbon dioxide.

Upgrading of the carbon dioxide concentration in a feed can be carried out in a number of ways. One particularly preferred method is the chemical absorption of carbon dioxide from the crude carbon dioxide feed into an alkanolamine based absorbent. The resulting carbon dioxide loaded absorbent then undergoes separation into a carbon dioxide product for recovery and into alkanolamine containing absorbent which may be recycled for reuse within the recovery system.

The recovery of carbon dioxide is particularly important in the ammonia process in order to separate hydrogen from carbon dioxide, in the mixture of hydrogen and carbon dioxide produced by the shift conversion unit: hydrogen cannot be used in an ammonia converter, for the production of ammonia, unless it is essentially free of carbon dioxide.

In GB996543A, it is described how a carbon dioxide containing gas is scrubbed with an aqueous solution of an alkanolamine in a tower (18), wherein the solution having absorbed carbon dioxide is withdrawn from the tower (18), and is regenerated in a tower (32), being heated indirectly by the steam from the waste-heat boiler (2) and stripped by steam from the waste-heat boiler (9).

In DE102018210921A1, a unit and a related process for the production of hydrogencontaining synthesis gas it is described, at least comprising (a) a reformer (1); (b) a carbon monoxide (CO) converter (2); (c) a synthesis gas condenser (4); (d) a carbon dioxide (CO₂) scrubber unit with regeneration (3); characterized in that the synthesis gas condenser (4) is connected to a deaerator (5) and the deaerator (5) is connected to a reformer burner (6) and/or a fired auxiliary steam boiler (7).

Hence, the prior art describes the regeneration of a carbon dioxide absorbing solution by heating with steam and the condensation of a synthesis gas and its subsequent processing in a deaerator. The prior art does not provide teaching as to how the condensate from the steam used to regenerate a solution having absorbed carbon dioxide is to be treated.

Regenerating the steam used to regenerate a solution having absorbed carbon dioxide is important from an energy recovery perspective and should be performed in an energy-efficient manner. At the same time, the process condensate generated from the use of steam should be treated and used for regenerating steam in such a manner that the equipment in the unit is not subjected to corrosion.

The present disclosure provides a method and a system for utilizing the complete heat content of a steam condensate generated by a high-pressure regenerator, at the same time as ensuring that the equipment in the unit is not subjected to corrosion.

### Summary

In one aspect of the disclosure, a method is disclosed for treating a steam condensate generated by a high-pressure regenerator for regenerating a carbon dioxide absorption solution. The method comprises the steps of:
a) capturing carbon dioxide in a carbon dioxide absorption unit using a carbon dioxide absorption solution;
b) feeding the carbon dioxide absorption solution comprising absorbed carbon dioxide and generated in step a) to a high-pressure regenerator; and
c) supplying low-pressure steam to a steam-fired reboiler for supplying heat to the high-pressure regenerator, thereby producing a steam condensate and a regenerated carbon dioxide absorption solution;
   and is characterised in that it further comprises the step of:
d) supplying the steam condensate produced in step c) to a de-aerator, thereby producing an aqueous solution suitable for producing steam with an oxygen content lower than 20 ppb.

Surprisingly, the inventors have found that the method of the disclosure allows for utilizing the complete heat content of the steam condensate generated by the high-pressure regenerator, at the same time as ensuring that the equipment in the unit is not subjected to corrosion since it is energy-efficiently processed in the de-aerator.

In one embodiment according to the method of the disclosure, the aqueous solution suitable for producing steam has an oxygen content ranging from 7 ppb to less than 20 ppb.

In one embodiment according to the method of the disclosure, the method further comprises the step of
e) re-using the regenerated carbon dioxide absorption solution produced in step c) for absorbing additional carbon dioxide in the carbon dioxide absorption unit.

In one embodiment according to the method of the disclosure, the carbon dioxide absorption solution comprises about 30% potassium carbonate, optionally partly or completely converted to potassium bicarbonate.

In one embodiment according to the method of the disclosure, the carbon dioxide absorption solution comprises about 30% potassium carbonate, about 5% potassium bicarbonate, about 0.5% diethanolamine and about 0.5% glycine.

In one embodiment according to the method of the disclosure, the method further comprises the step of:
f) producing steam from the aqueous solution produced by step d).

In one embodiment according to the method of the disclosure, the method further comprises the steps of:
g) removing sulfur from a feed of natural gas in a sulfur removal unit for producing a feed of natural gas essentially free of sulfur;
h) converting the feed of natural gas essentially free of sulfur obtained in step g), using steam, into a mixture of carbon monoxide and hydrogen in a primary reformer;
i) optionally, increasing the conversion of the feed of natural gas essentially free in sulfur, using oxygen, into a mixture of carbon monoxide and hydrogen achieved in the primary reformer in step h), in a secondary reformer;
j) converting the mixture of carbon monoxide and hydrogen obtained in step h), or optionally in step i), into a mixture of carbon dioxide and hydrogen in a shift conversion unit; and
k) feeding the gaseous mixture of carbon dioxide and hydrogen generated in step j) to the carbon dioxide absorption unit, thereby producing hydrogen essentially free in carbon dioxide; and
I) feeding the hydrogen produced in step k) to a methanation unit for converting remaining amounts of carbon monoxide and carbon dioxide into methane.

In one embodiment according to the method of the disclosure, the method further comprises the step of:
m) feeding the mixture of hydrogen and methane obtained from step I) to an ammonia converter for producing ammonia.

In another aspect of the disclosure, a system is disclosed for recovering the heat content of a steam condensate generated by a high-pressure regenerator for regenerating a carbon dioxide absorption solution. The system comprises:
- a carbon dioxide removal unit comprising:
   ∘ a carbon dioxide absorption unit;
   ∘ the high-pressure regenerator for regenerating a carbon dioxide absorption solution comprising absorbed carbon dioxide; and
   ∘ a steam-fired reboiler comprising an inlet for supplying heat to the high-pressure regenerator and an outlet for a steam condensate, produced by the exchange of the heat of the steam in the steam-fired reboiler with the high-pressure regenerator; and
- a de-aerator for producing an aqueous solution with an oxygen content lower than 5 ppm, particularly lower than 20 ppb, comprising an inlet and an outlet;
and is characterised in that the inlet of the de-aerator is in fluid communication with the outlet of the steam-fired reboiler.

In one embodiment according to the system of the disclosure, the system further comprises means for recycling the regenerated carbon dioxide absorption solution regenerated in the high-pressure regenerator.

In one embodiment according to the system of the disclosure, the system further comprises means for producing steam with an oxygen content ranging from 7 ppb to less than 20 ppb from the aqueous solution produced in the de-aerator, wherein the means for producing steam are in direct fluid communication with the de-aerator.

In one embodiment according to the system of the disclosure, the system is the front end of an ammonia production unit and further comprises:
- a sulfur removal unit for removing sulfur from a feed of natural gas;
- a primary reformer for converting a feed of natural gas essentially free of sulfur into a mixture of carbon monoxide and hydrogen;
- optionally, a secondary reformer for increasing the conversion of the feed of natural gas essentially free of sulfur into a mixture of carbon monoxide and hydrogen achieved in the primary reformer; and
- a shift conversion unit for converting the mixture of carbon monoxide and hydrogen produced in the primary reformer or, optionally, in the secondary reformer;
wherein:
- the sulfur removal unit is in direct fluid communication with the primary reformer;
- the primary reformer is in direct fluid communication with the shift conversion unit in the absence of a secondary reformer and is in direct fluid communication with the secondary reformer when a secondary reformer is present;
- the secondary reformer, when present, is in direct fluid communication with the shift conversion unit;
- the shift conversion unit is in direct fluid communication with the carbon dioxide absorption unit; and
- a methanation unit for converting remaining amounts of carbon monoxide and carbon dioxide into methane, wherein the methanation unit is in direct fluid communication with the shift conversion unit.

In one embodiment according to the system of the disclosure, the front end is fluidly connected to an ammonia converter for producing ammonia.

In another aspect of the disclosure, the use of the system for recovering heat of the disclosure for performing the method for recovering heat of the disclosure is disclosed.

In another aspect of the disclosure, a method for revamping a system for recovering heat comprising:
- a carbon dioxide removal unit comprising:
   ∘ a carbon dioxide absorption unit;
   ∘ a high-pressure regenerator for regenerating a carbon dioxide absorption solution comprising absorbed carbon dioxide; and
   ∘ a steam-fired reboiler comprising an inlet and an outlet, for supplying heat to the high-pressure regenerator, thereby producing a steam condensate and a regenerated carbon dioxide absorption solution; and
- a process condensate stripper for stripping the condensate produced by the steam-fired reboiler comprising an inlet in direct fluid communication with the outlet of the steam-fired reboiler and an outlet;
- a water demineralisation unit comprising an inlet in direct fluid communication with the outlet of the process condensate stripper and an outlet; and
- a de-aerator for producing an aqueous solution with an oxygen content lower than 5 ppm comprising an inlet in direct fluid communication with the outlet of the water demineralisation unit and an outlet;
into a system according to the present disclosure, comprising the steps of:
(I) fluidly deconnecting the outlet of the steam-fired reboiler from the inlet of the process condensate stripper;
(II) fluidly deconnecting the inlet water demineralisation unit from the outlet of the process condensate stripper; and
(III) fluidly connecting the outlet of steam-fired reboiler to the inlet of the de-aerator.

### List of Figures

**Figure 1** show a schematic representation of the new process of the disclosure and the differences with a conventional system from the prior art.
**Figure 2** show a schematic representation of an ammonia production process in which the process of the disclosure can be integrated.

**List of numerals in Figures**

| | |
|---|---|
| **11** | sulfur removal unit |
| **19** | primary reformer |
| **24** | shift conversion unit |
| **28** | carbon dioxide removal unit |
| **32** | methanation unit |
| **36** | ammonia synthesis unit, also referred to herein as ammonia converter |
| **53** | secondary reformer |
| **56** | carbon dioxide absorption unit |
| **57** | high-pressure regenerator |
| **58** | steam-fired reboiler |
| **59** | de-aerator |
| **60** | inlet of steam-fired reboiler |
| **61** | outlet of steam-fired reboiler |
| **62** | means for producing steam |
| **63** | Process condensate stripper |
| **64** | water demineralisation unit |
| **65** | Inlet of the process condensate stripper |
| **66** | Outlet of the process condensate stripper |
| **67** | Inlet of the demineralisation |
| **68** | Outlet of the demineralisation unit |
| **69** | Inlet of the deaerator |
| **70** | Outlet of the deaerator |
| **71** | Ammonia production unit |

### Detailed description

Before the present system and method of the disclosure are described, it is to be understood that this disclosure is not limited to particular systems and methods or combinations described, since such systems and methods and combinations may, of course, vary. It is also to be understood that the terminology used herein is not intended to be limiting, since the scope of the present disclosure will be limited only by the appended claims.

As used herein, the singular forms "a", "an", and "the" include both singular and plural referents unless the context clearly dictates otherwise.
The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The enumeration of numeric values by means of ranges of figures comprises all values and fractions in these ranges, as well as the cited end points. The term "from ... to ..." as used when referring to a range for a measurable value, such as a parameter, an amount, a time period, and the like, is intended to include the limits associated to the range that is disclosed.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed disclosure. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

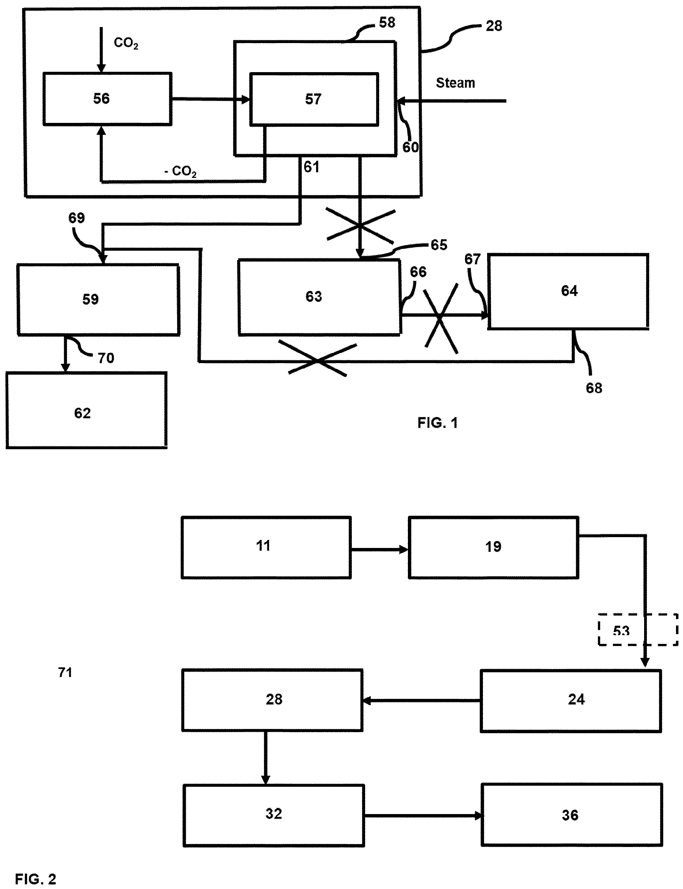

Reference is made to Figure 1. In one aspect of the disclosure, a method is disclosed for treating of a steam condensate generated by a high-pressure regenerator (**57**) for regenerating a carbon dioxide absorption solution. A high-pressure regenerator is herein defined as a regenerator operating at a pressure ranging from 1.0 kg/cm² to 1.1 kg/cm². The method comprises the steps of: a) capturing carbon dioxide in a carbon dioxide absorption (**56**) unit using a carbon dioxide absorption solution; b) feeding the carbon dioxide absorption solution comprising absorbed carbon dioxide and generated in step a) to the high-pressure regenerator (**57**); and c) supplying low-pressure steam, that is steam at a pressure ranging from 3.2 kg/cm² to 3.5 kg/cm², to a steam-fired reboiler (**58**) for supplying heat to the high-pressure regenerator (**57**), thereby producing a steam condensate and a regenerated carbon dioxide absorption solution; and is characterised in that it further comprises the step of: d) supplying the steam condensate produced in step c) to a deaerator (**59**), thereby producing an aqueous solution suitable for producing steam with an oxygen content lower than 20 ppb.

As defined herein, a carbon dioxide absorption unit is any unit in which gaseous carbon dioxide from a mixture of gases is absorbed in a liquid, the so-called carbon dioxide absorption solution. As a result of this absorption, a carbon dioxide absorption solution comprising absorbed carbon dioxide is generated and the mixture of gases from which carbon dioxide has been separated is, therefore, purified from carbon dioxide. As it is economically interesting to re-use the carbon dioxide solution, a technical solution is required in order to regenerate the solution after it has absorbed carbon dioxide. Said otherwise, there is a need for desorbing the carbon dioxide after it has been absorbed such that the carbon dioxide absorption solution is regenerated and has the capacity to absorb additional carbon dioxide. The desorbed carbon dioxide can, for example, be utilised in processes consuming carbon dioxide, such as urea production.

Typically, the carbon dioxide is regenerated by heating the solution comprising absorbed carbon dioxide in a heat exchange system. A heat exchange system comprising a high-pressure regenerator (**57**) comprising the solution to be regenerated, and a steam-fired reboiler (**58**) exchanging steam to the solution, is a known such heat-exchange system. As a result of the heat exchange process, the carbon dioxide absorbed in the solution to be regenerated is evaporated and the solution is, therefore, suitable for being re-used in the carbon dioxide absorption unit (**56**). On the side of the reboiler (**58**), after the heat exchange of steam, a process condensate is produced.

Typically, in prior art systems, the process condensate is processed in a process condensate stripper (63) for stripping any gas. In the stripper, the condensate to be stripped comes in contact with steam and the gases dissolved in the condensate are stripped, such that water of a suitable gas content is recovered and can be used for producing additional steam. Typically, the stripped condensate is subsequently treated in a water demineralisation unit (64) to further purify the water before it is used for producing steam. In addition, the demineralised water then needs to be treated in a de-aerator in order to reduce the oxygen content to levels below 20 ppb: this reduction of the level of oxygen is necessary in order to prevent the corrosion of the equipment in which steam is generated from water and subsequently used for exchanging heat.

The presence and the use associated to the presence of a process condensate stripper (**63**) and of a water demineralisation unit (**64**) imply high energy consumption. The inventors of the present disclosure have established that the presence of such process condensate stripper and demineralisation unit (**64**) is not necessary for processing the condensate generated in the steam-fired reboiler (**58**). Instead of processing the process condensate from the steam-fired reboiler (**58**) through a process condensate stripper (**63**) and a water demineralisation unit (**64**), the process condensate can be sent directly to the de-aerator. In this manner, energy is not only saved by avoiding the actual chemical treatment of the process condensate in the process condensate stripper (**63**) and in the water demineralisation unit (**64**), but also by avoiding the pumping of an equivalent amount of demineralised water to the de-aerator (**59**). All that is necessary is to supply the process condensate directly to the de-aerator (**59**), in particular via a direct connection between the reboiler (**58**) and de-aerator(**59**), by connecting the process condensate outlet (**61**) of the reboiler (**58**) to the inlet (**69**) of the de-aerator (**59**). As a result, the equipment in the process is greatly simplified, the footprint of the system is greatly reduced, thereby reducing the costs associated to the system and to its operation.

In one embodiment according to the method of the disclosure, the aqueous solution suitable for producing steam obtained in step d) has an oxygen content ranging from 7 ppb to less than 20 ppb.

In one embodiment according to the method of the disclosure, the method further comprises the step e) of re-using the regenerated carbon dioxide absorption solution produced in step c) for absorbing additional carbon dioxide in the carbon dioxide absorption unit (**56**). As described above, this allows for the reduction of the amount of absorption solution to be used for absorbing a defined quantity of carbon dioxide.

In one embodiment according to the method of the disclosure, the carbon dioxide absorption solution comprises about 30% potassium carbonate, optionally partly or completely converted to potassium bicarbonate.

In one embodiment according to the method of the disclosure, the carbon dioxide absorption solution comprises about 30% potassium carbonate, about 5% potassium bicarbonate, about 0.5% diethanolamine and about 0.5% glycine.

In one embodiment according to the method of the disclosure, the method further comprises the step of f) producing steam from the aqueous solution produced by step d). By using water with a content in oxygen lower than 20 ppb, particularly ranging from 7 ppb to 20 ppb, steam can be produced and can be being supplied, for example, to the steam-fired reboiler (**58**) for regenerating an additional quantity of a carbon dioxide absorption solution comprising absorbed carbon dioxide, in the high-pressure regenerator (**57**).

Reference is made to Figure 2. In one embodiment according to the method of the disclosure, the method is performed in the front end (or the hydrogen production section) of an ammonia production unit (**71**) and further comprises the steps of g) removing sulfur from a feed of natural gas in a sulfur removal unit (**11**) for producing a feed of natural gas essentially free of sulfur; h) converting the feed of natural gas essentially free of sulfur obtained in step g), using steam, into a mixture of carbon monoxide and hydrogen in a primary reformer (**19**); i) optionally, increasing the conversion of the feed of natural gas essentially free in sulfur, using oxygen, into a mixture of carbon monoxide and hydrogen achieved in the primary reformer (**19**) in step h), in a secondary reformer (**53**); j) converting the mixture of carbon monoxide and hydrogen obtained in step h), or optionally in step i), into a mixture of carbon dioxide and hydrogen in a shift conversion unit (**24**); k) feeding the gaseous mixture of carbon dioxide and hydrogen generated in step j) to the carbon dioxide absorption unit (**56**), thereby producing hydrogen essentially free in carbon dioxide; and I) feeding the hydrogen produced in step k) to a methanation unit (**32**) for converting remaining amounts of carbon monoxide and carbon dioxide into methane.

Hence, the disclosure provides for the possibility to apply the method of the disclosure to the carbon dioxide removal unit (**28**) in the "front end", that is the hydrogen production section, of an ammonia production system (**71**).

In one embodiment according to the method of the disclosure, the method further comprises the steps of m) feeding the mixture of hydrogen and methane obtained from step I) to an ammonia converter (**36**).

Hence, the disclosure not only provides for the possibility to apply the method of the disclosure to the carbon dioxide removal unit (**28**) in the "front end", that is the hydrogen production section, of an ammonia production system, it further allows for the reaction of the produced hydrogen with nitrogen in an ammonia converter. Ammonia can, therefore, be produced while energy is saved from the carbon dioxide removal unit (**28**).

Reference is made to Figure 1. In another aspect of the disclosure, a system is disclosed for recovering the heat of a steam condensate generated by a high-pressure regenerator (**57**) for regenerating a carbon dioxide absorption solution. The system comprises a de-aerator (**59**) for producing an aqueous solution with an oxygen content lower than 20 ppb, particularly with an oxygen content ranging from 7 ppb to 20 ppb, comprising an inlet and an outlet; and a carbon dioxide removal unit (**28**) comprising a carbon dioxide absorption unit (**56**); the high-pressure regenerator (**57**) for regenerating a carbon dioxide absorption solution comprising absorbed carbon dioxide; and a steam-fired reboiler (**58**) comprising an inlet (**60**) for supplying heat to the high-pressure regenerator (**57**) and an outlet (**61**) for a steam condensate, produced by the exchange of the heat of the steam in the steam-fired reboiler with the high-pressure regenerator; and is characterised in that the inlet (**60**) of the de-aerator (**59**) is in direct fluid communication with the outlet (**61**) of the steam-fired reboiler (**58**). Stated differently, the inlet (**60**) of the de-aerator (**59**) is connected to the outlet (**61**) of the steam-fired reboiler (**58**).

As described above in conjunction with the method developed, the inventors of the present disclosure have established that the presence of a process condensate stripper (**63**) and demineralisation unit (**64**) is not necessary for processing the condensate generated in the steam-fired reboiler. Since, instead of processing the process condensate from the steam-fired reboiler (**58**) through a process condensate stripper (**63**) and a water demineralisation unit (**64**), the process condensate can be sent directly to the de-aerator, the equipment in the process is greatly simplified, the footprint of the system is greatly reduced, thereby reducing the costs associated to the system.

In one embodiment according to the system of the disclosure, the system further comprises means for recycling the regenerated carbon dioxide absorption solution regenerated in the high-pressure regenerator (**57**). Such a system allows for, as described above, subsequently re-using the regenerated carbon dioxide absorption solution produced in step a) for absorbing additional carbon dioxide in the carbon dioxide absorption unit (**56**). Therefore, this system allows for the reduction of the amount of absorption solution to be used for absorbing a defined quantity of carbon dioxide.

In one embodiment according to the system of the disclosure, the system further comprises means for producing steam (**62**) with an oxygen content ranging from 7 ppb to less than 20 ppb from the aqueous solution produced in the de-aerator (**59**), wherein the means for producing steam (**62**) are in direct fluid communication with the de-aerator (**59**).

Reference is made to Figure 2. In one embodiment according to the system of the disclosure, the system is the front end or the hydrogen production section of an ammonia production unit (**71**) and further comprises a sulfur removal unit (**11**) for removing sulfur from a feed of natural gas; a primary reformer (**19**) for converting a feed of natural gas essentially free of sulfur into a mixture of carbon monoxide and hydrogen; optionally, a secondary reformer (**53**) for increasing the conversion of the feed of natural gas essentially free of sulfur into a mixture of carbon monoxide and hydrogen achieved in the primary reformer (**19**); a shift conversion unit (**26**) for converting the mixture of carbon monoxide and hydrogen produced in the primary reformer (**19**) or, optionally, in the secondary reformer (**53**); and a methanation unit (**32**) for converting remaining amounts of carbon monoxide and carbon dioxide into methane; wherein the sulfur removal unit (**11**) is in direct fluid communication with the primary reformer (**19**); the primary reformer (**19**) is in direct fluid communication with the shift conversion unit (**26**) in the absence of a secondary reformer (**53**) and is in direct fluid communication with the secondary reformer when a secondary reformer (**53**) is present; the secondary reformer (**53**), when present, is in direct fluid communication with the shift conversion unit (26); the shift conversion unit (**26**) is in direct fluid communication with the carbon dioxide absorption unit (**56**); and the methanation unit (**32**) is in direct fluid communication with the shift conversion unit (**26**).

Hence, the disclosure not only provides for a carbon dioxide removal unit (**28**), it provides a "front end", that is a hydrogen production section, of an ammonia production system.

In one embodiment according to the system of the disclosure, the system further comprises an ammonia converter (**36**) in direct fluid communication with the methanation unit (**32**).

Hence, the disclosure not only provides for a carbon dioxide removal unit (**28**) and a "front end", that is the hydrogen production section, of an ammonia production system, it further provides an ammonia converter for reacting of the produced hydrogen with nitrogen in an ammonia converter. Ammonia can, therefore, be produced while energy is saved from the carbon dioxide removal unit (**28**).

In another aspect of the disclosure, the use of the system for recovering heat of the disclosure for performing the method for recovering heat of the disclosure is disclosed.

Reference is made to Figure 1. In another aspect of the disclosure, a method for revamping an existing system comprising a process condensate stripper (**63**) for stripping the condensate produced by the steam-fired reboiler (**58**) comprising an inlet (**65**) in direct fluid communication with the outlet (**61**) of the steam-fired reboiler (**58**) and an outlet (**66**); a water demineralisation unit (**64**) comprising an inlet (**67**) in direct fluid communication with the outlet (**66**) of the process condensate stripper (**63**) and an outlet (**68**); a de-aerator (**59**) for producing an aqueous solution with an oxygen content lower than 20 ppb comprising an inlet (**69**) in direct fluid communication with the outlet (**68**) of the water demineralisation unit (**64**) and an outlet (**70**); a carbon dioxide removal unit (**28**) comprising a carbon dioxide absorption unit (**56**); a high-pressure regenerator (**57**) for regenerating a carbon dioxide absorption solution comprising absorbed carbon dioxide; and a steam-fired reboiler (**58**) comprising an inlet (**60**) and an outlet (**61**), for supplying heat to the high-pressure regenerator (**57**), thereby producing a steam condensate and a regenerated carbon dioxide absorption solution; into a system according to the present disclosure is disclosed.

The method for revamping comprises the steps of (I) fluidly deconnecting the outlet (**61**) of the steam-fired reboiler (**58**) from the inlet (**65**) of the process condensate stripper (**63**); (II) fluidly deconnecting the inlet (**67**) water demineralisation unit (**64**) from the outlet (**66**) of the process condensate stripper (**63**); and (III) fluidly connecting the outlet (**61**) of steam-fired reboiler (**58**) to the inlet (**69**) of the de-aerator (**59**).

By performing such revamping method, this is possible to convert the system according to the state of the art into the system of the disclosure, thereby, as described in conjunction with the system of the disclosure, removing the process condensate stripper (**63**) and the water demineralisation unit (**64**). As a result, the equipment in the process is greatly simplified, the footprint of the system is greatly reduced, thereby reducing the costs associated to the system.

## Claims

1. A method for treating a steam condensate generated by a high-pressure regenerator (**57**) for regenerating a carbon dioxide absorption solution comprising the steps of:
a) capturing carbon dioxide in a carbon dioxide absorption (**56**) unit using a carbon dioxide absorption solution;
b) feeding the carbon dioxide absorption solution comprising absorbed carbon dioxide and generated in step a) to the high-pressure regenerator (**57**); and
c) supplying low-pressure steam to a steam-fired reboiler (**58**) for supplying heat to the high-pressure regenerator (**57**), thereby producing a steam condensate and a regenerated carbon dioxide absorption solution;
**characterised in that** the method further comprises the step of:
d) directly supplying the steam condensate produced in step c) to the de-aerator (**59**), thereby producing an aqueous solution suitable for producing steam with an oxygen content lower than 20 ppb.

2. The method according to claim 1, wherein the aqueous solution suitable for producing steam has an oxygen content ranging from 7 ppb to less than 20 ppb.

3. The method according to any one of claims 1 to 2, further comprising the step of:
e) re-using the regenerated carbon dioxide absorption solution produced in step c) for absorbing additional carbon dioxide in the carbon dioxide absorption unit (**56**).

4. The method according to any one of claims 1 to 3, further comprising the step of:
f) producing steam from the aqueous solution produced by step d).

5. The method according to any one of claims 1 to 4, wherein the carbon dioxide absorption solution comprises about 30% potassium carbonate, optionally partly or completely converted to potassium bicarbonate.

6. The method according to claim 5, wherein the carbon dioxide absorption solution comprises about 30% potassium carbonate, about 5% potassium bicarbonate, about 0.5% diethanolamine and about 0.5% glycine.

7. The method according to any one of claims 1 to 6, further comprising the steps of:
g) removing sulfur from a feed of natural gas in a sulfur removal unit (**11**) for producing a feed of natural gas essentially free of sulfur;
h) converting the feed of natural gas essentially free of sulfur obtained in step g), using steam, into a mixture of carbon monoxide and hydrogen a primary reformer (**19**);
i) optionally, increasing the conversion of the feed of natural gas essentially free in sulfur, using oxygen, into a mixture of carbon monoxide and hydrogen achieved in the primary reformer (**19**) in step h), in a secondary reformer (**53**);
j) converting the mixture of carbon monoxide and hydrogen obtained in step h), or optionally in step i), into a mixture of carbon dioxide and hydrogen in a shift conversion unit (**24**);
k) feeding the gaseous mixture of carbon dioxide and hydrogen generated in step j) to the carbon dioxide absorption unit (**56**), thereby producing hydrogen essentially free in carbon dioxide; and
I) feeding the hydrogen produced in step k) to a methanation unit (**32**) for converting remaining amounts of carbon monoxide and carbon dioxide into methane.

8. The method according to claim 7, further comprising the step of:
m) feeding the mixture of hydrogen and methane obtained from step I) to an ammonia converter (**36**).

9. A system for treating of a steam condensate generated by a high-pressure regenerator for regenerating a carbon dioxide absorption solution, comprising:
• a carbon dioxide removal unit (**28**) comprising:
∘ a carbon dioxide absorption unit (**56**);
∘ a high-pressure regenerator (**57**) for regenerating a carbon dioxide absorption solution comprising absorbed carbon dioxide; and
∘ a steam-fired reboiler (**58**) comprising an inlet (**60**) for supplying heat to the high-pressure regenerator (**57**) and an outlet (**61**) for a steam condensate, produced by the exchange of the heat of the steam in the steam-fired reboiler with the high-pressure regenerator; and
• a de-aerator (**59**) for producing an aqueous solution with an oxygen content lower than 20 ppb, comprising an inlet and an outlet;
**characterised in that** the inlet (**60**) of the de-aerator (**59**) is in direct fluid communication with the outlet (**61**) of the steam-fired reboiler (**58**).

10. The system according to claim 9, further comprising means for recycling the regenerated carbon dioxide absorption solution regenerated in the high-pressure regenerator (**57**).

11. The system according to any one of claims 9 to 10, further comprising means for producing steam (**62**) with an oxygen content ranging from 7 ppb to less than 20 ppb from the aqueous solution produced in the de-aerator (**59**), wherein the means for producing steam (**62**) are in direct fluid communication with the de-aerator (**59**).

12. The system according to any one of claims 9 to 11, wherein the system is the hydrogen production section of an ammonia production unit (**71**), further comprising:
• a sulfur removal unit (**11**) for removing sulfur from a feed of natural gas;
• a primary reformer (**19**) for converting a feed of natural gas essentially free of sulfur into a mixture of carbon monoxide and hydrogen;
• optionally, a secondary reformer (**53**) for increasing the conversion of the feed of natural gas essentially free of sulfur into a mixture of carbon monoxide and hydrogen achieved in the primary reformer (**19**); and
• a shift conversion unit (**26**) for converting the mixture of carbon monoxide and hydrogen produced in the primary reformer (**19**) or, optionally, in the secondary reformer (**53**); and
• a methanation unit (**32**) for converting remaining amounts of carbon monoxide and carbon dioxide into methane;
wherein:
• the sulfur removal unit (**11**) is in direct fluid communication with the primary reformer (**19**);
• the primary reformer (**19**) is in direct fluid communication with the shift conversion unit (**26**) in the absence of a secondary reformer (**53**) and is in direct fluid communication with the secondary reformer when a secondary reformer (**53**) is present;
• the secondary reformer (**53**), when present, is in direct fluid communication with the shift conversion unit (**26**); and
• the shift conversion unit (**26**) is in direct fluid communication with the carbon dioxide absorption unit (**56**); and
• the methanation unit (**32**) is in direct fluid communication with the shift conversion unit (**26**).

13. The system according to claim 12, further comprises an ammonia converter (**36**) in direct fluid communication with the methanation unit (**32**).

14. Use of the system for recovering heat according to any one of claims 9 to 13 in performing the method for recovering heat according to any one of claims 1 to 7.

15. A method for revamping an existing system for recovering heat comprising:
• a carbon dioxide removal unit (**28**) comprising:
∘ a carbon dioxide absorption unit (**56**);
∘ a high-pressure regenerator (**57**) for regenerating a carbon dioxide absorption solution comprising absorbed carbon dioxide; and
∘ a steam-fired reboiler (**58**) comprising an inlet (**60**) and an outlet (**61**), for supplying heat to the high-pressure regenerator (**57**), thereby producing a steam condensate and a regenerated carbon dioxide absorption solution; and
• a process condensate stripper (**63**) for stripping the condensate produced by the steam-fired reboiler (**58**) comprising an inlet (**65**) in direct fluid communication with the outlet (**61**) of the steam-fired reboiler (**58**) and an outlet (**66**);
• a water demineralisation unit (**64**) comprising an inlet (**67**) in direct fluid communication with the outlet (**66**) of the process condensate stripper (**63**) and an outlet (**68**); and
• a de-aerator (**59**) for producing an aqueous solution with an oxygen content lower than 5 ppm, particularly lower than 20 ppb, comprising an inlet (**69**) in direct fluid communication with the outlet (**68**) of the water demineralisation unit (**64**) and an outlet (**70**);
into a system according to any one of claims 8 to 13, comprising the steps of:
(I) fluidly deconnecting the outlet (**61**) of the steam-fired reboiler (**58**) from the inlet (**65**) of the process condensate stripper (**63**);
(II) fluidly deconnecting the inlet (**67**) water demineralisation unit (**64**) from the outlet (**66**) of the process condensate stripper (**63**); and
(III) fluidly connecting the outlet (**61**) of steam-fired reboiler (**58**) to the inlet (**69**) of the de-aerator (**59**).
